# FASCICULE DE BREVET EUROPEEN

(11) **EP 3 083 089 B1**
(45) Date de publication et mention de la délivrance du brevet: **13.09.2017**
(21) Numéro de dépôt: 15781384.1
(22) Date de dépôt: 22.09.2015
(51) Int. Cl.: B09B 3/00, A62D 3/36, C04B 14/40, C04B 18/04, C01B 33/20, A62D 101/41

(54) **PROCEDE ET SYSTEME DE NEUTRALISATION D'AMIANTE**
VERFAHREN UND SYSTEM ZUR NEUTRALISIERUNG VON ASBEST
METHOD AND SYSTEM FOR NEUTRALIZING ASBESTOS

(30) Priorité: 22.09.2014 FR 1458915
(43) Date de publication de la demande: 26.10.2016
(73) Titulaire: Poggi, Paul, 1815 Clarens (CH)
(72) Inventeur: Poggi, Paul, 1815 Clarens (CH)
(74) Mandataire: Cornuejols, Georges
(86) Numéro de dépôt international: PCT/FR2015/052542
(87) Numéro de publication internationale: WO 2016/046493

(56) Documents cités:
- CA-A1- 2 235 424
- FR-A1- 2 790 980
- FR-A1- 2 930 893
- JP-A- 2008 253 856

## Description

### Domaine de l'invention

La présente invention concerne un système de neutralisation et de recyclage d'amiante. Elle s'applique, en particulier à la neutralisation d'amiante sur chantier de désamiantage.

### État de la technique

L'amiante n'est pas un minéral en soi. C'est un terme générique qui désigne un groupe de roches naturelles métamorphiques, de morphologie fibreuse. Le terme « amiante » a été adopté à des fins d'identification commerciale.

L'amiante regroupe deux grandes familles :
- les serpentines, ne comportant qu'une seule variété, Chrysotile, et
- les amphiboles, qui se décomposent en cinq variétés, Amosite, Crocidolite, Actinolite, Anthrophyllite et Trémolite.

Trois variétés sont commercialisées :
- chrysotile (amiante blanc), de formule chimique Mg₃Si₂O₅(OH)₄,
- crocidolite (amiante bleu), de formule chimique Na₂(Mg,Fe)₃Al₂Si₈O₂₂(OH)₂ et
- amosite (amiante brun), de formule chimique (Mg,Fe)₇Si₈O₂₂(OH)₂

La variété Chrysotile représente plus de 95% de l'amiante produit et consommé entre 1900 et 2003.

L'amiante est un matériau qui possède plusieurs avantages :
- des propriétés physico-chimiques intéressantes, telles que la résistance thermique, mécanique et chimique,
- un faible prix de vente du fait d'un coût de production faible.

C'est pourquoi il a été utilisé dans la fabrication de plus de 3 000 produits, notamment dans les matériaux de construction. On le trouve notamment dans :
- les flocages,
- les faux plafonds,
- les revêtements de sol,
- les calorifugeages,
- les cartons,
- les joints,
- les revêtements de murs et plafonds,
- les toitures et façades et
- les conduites d'eau et de ventilation.

On distingue trois grands types de déchets contenant de l'amiante :
- les déchets d'amiante libre, qui proviennent des flocages et calorifugeages dont les fibres peuvent se libérer dans l'atmosphère avec la dégradation des matériaux,
- les déchets d'amiante lié ou amiante-ciment, qui ne sont pas susceptibles de libérer des fibres,
- les autres déchets contenant de l'amiante, tels que les plaquettes de frein et autres produits.

L'amiante libère, en se désagrégeant, des fibres microscopiques qui restent en suspension dans l'air et qui, lorsqu'elles sont inhalées, peuvent atteindre les alvéoles pulmonaires.

Les travaux réalisés sur l'amiante ont montré que des risques liés à l'emploi de ce matériau existent surtout lorsque l'amiante se présente sous la forme de particules inhalables, notamment sous la forme de fibres aciculaires libres, l'inhalation de particules de ce type étant susceptible d'induire des formations fibreuses ou cancéreuses notamment dans le corps humain, pouvant se traduire par l'apparition de maladies de type cancer du poumon ou asbestose. Les pathologies de ce type ont été attribuées à la forme aciculaire des fibres d'amiantes mais également à un effet des ions libérés après dissolution partielle de l'amiante au niveau des tissus vivants.

Cela peut conduire à l'apparition de plusieurs maladies :
- l'asbestose, maladie pulmonaire analogue à la silicose des mineurs, des lésions bénignes de la plèvre,
- le cancer du poumon (risques accrus s'il y a association avec le tabac) et
- les mésothéliomes, cancers rares mais graves de la plèvre et du péritoine.

Compte tenu de ces risques, les déchets contenant de l'amiante sont considérés comme des déchets industriels dangereux, et on a cherché durant ces dernières années à développer des techniques permettant de les confiner ou de les éliminer efficacement. Il est à noter à ce sujet qu'il existe de nombreux déchets de ce type, qui sont essentiellement des amiantes floqués de calorifugeage ou des amiantes-ciments qui étaient utilisés couramment notamment en France, par exemple dans le domaine du bâtiment et des travaux publics, jusqu'à l'interdiction en 1997 de la fabrication et de l'exploitation des produits contenant des fibres d'amiante.

Un diagnostic de la présence d'amiante est imposé par la loi pour tous les travaux soumis à autorisation de démolition ou de transformation d'immeubles construits avant le 1 er janvier 1991. Les éléments contenant de l'amiante sont enlevés et éliminés dans les règles de l'art.

Deux filières d'élimination de déchets d'amiante sont connues à ce jour : enfouissement et vitrification.

La première solution adoptée pour la gestion des déchets contenant de l'amiante est celle consistant à stocker les déchets à base d'amiante dans des centres de stockage pour déchets dangereux. Ce confinement est une solution peu satisfaisante, notamment dans la mesure où elle n'implique aucun traitement capable de rendre les déchets inoffensifs et qu'elle conduit de ce fait à une accumulation de déchets dangereux sur un site sensible. De plus, les capacités de stockage dans des centres de stockage ne sont pas illimitées, et elles ont en outre un coût non négligeable. Par ailleurs, la responsabilité du producteur du déchet reste toujours engagée tant que l'amiante existe, donc à vie.

Le coût de la mise en décharge est relativement important, environ 900€/tonne (hors transport).

Une autre solution mise en oeuvre aujourd'hui consiste à réaliser une vitrification des déchets à base d'amiante en portant ces déchets à haute température en employant typiquement une torche à plasma. Une telle vitrification de l'amiante s'avère certes une technique efficace de traitement de l'amiante, car elle conduit à une conversion de tout type d'amiante en un matériau vitrifié non susceptible de libérer des fibres inhalables d'amiante aciculaire. Néanmoins, un inconvénient majeur de cette méthode de vitrification est son coût très élevé, dû à la consommation énergétique très importante liée à l'emploi de la torche à plasma ainsi qu'au coût de mise en place et de maintenance des dispositifs de haute technologie qu'elle implique. Le coût de mise en oeuvre du procédé de vitrification est de l'ordre de 1350 à 3000 € HT / tonne (hors transport).

De plus, la technique de vitrification de l'amiante a une capacité de traitement relativement réduite (22 tonnes par jour pour la seule installation de ce type existant en Europe, soit 8000 tonnes par an), ce qui est très peu en comparaison des quantités très élevées de déchets à base d'amiante qui sont à traiter aujourd'hui. A titre indicatif, en France, la quantité annuelle de déchets contenant de l'amiante est de l'ordre de 200 000 tonnes d'amiante floqué et 20 millions de tonnes d'amiante-ciment. Aujourd'hui, environ 100 millions de m² des bâtiments français sont encore amiantés.

D'autres solutions que l'enfouissement et la vitrification ont été envisagées pour traiter des déchets à base d'amiante, qui se sont toutefois révélées inapplicables en pratique, ou moins efficaces que la vitrification.

Ainsi, il a par exemple été proposé de détruire la structure aciculaire des fibres de l'amiante en soumettant ces fibres à un broyage intensif visant à induire une amorphisation de l'amiante.

D'autre part, il a été proposé de réaliser une attaque acide de l'amiante dans le but de solubiliser ses fibres aciculaires. Dans ce cadre, une méthode radicale consiste en une attaque acide de l'amiante par de l'acide fluorhydrique concentré. Certes cette attaque se révèle très efficace, mais elle n'est envisageable qu'à l'échelle du laboratoire. En effet, la toxicité et les risques liés à l'emploi de l'acide fluorhydrique interdisent sa mise en oeuvre industrielle.

L'emploi d'autres acides que l'acide fluorhydrique précité a été proposé, mais une attaque par ces autres acides s'avère généralement inefficace pour traiter la plupart des amiantes. Ainsi, par exemple, il est décrit dans le document WO 97/27902 un traitement de dissolution de l'amiante par de l'acide chlorhydrique additionné d'ions potassium et éventuellement d'autres acides, à des températures de l'ordre de 30 à 95°. Le procédé décrit dans ce document peut certes s'avérer efficace avec certains types d'amiantes, notamment les amiantes de type chrysotile, mais il s'avère le plus souvent inadapté pour le traitement des amiantes de type amphiboles (notamment les cummingtonites (les amosites spécialement) et les crocidolites), et ce tout particulièrement lorsqu'il s'agit d'amiantes floqués. De nombreuses publications établissent en fait que l'attaque acide de l'amiante reste en règle générale très limitée à la surface des fibres aciculaires de l'amiante, en particulier lorsqu'il s'agit d'amiante de type amphibole. Ce qui semble s'expliquer par la formation d'un gel de surface qui empêcherait l'attaque du coeur des fibres d'amiante. Pour plus de détails à ce sujet, on pourra notamment se reporter à l'article "Dissolution of fibrous silicates in acid and buffered sait solutions", Allen MP. et Smith R.W., Minerais Engineering, vol.7, 1527-1537 (1994).

D'autres solutions envisagent un procédé de traitement d'un déchet contenant de l'amiante, comprenant de dissolution de l'amiante contenu dans le déchet, en faisant réagir ce déchet avec un acide autre que l'acide fluorhydrique à une température d'au moins 125° et à une pression supérieure à 0,2 MPa (c'est-à-dire à une pression d'au moins 2 bar), et dans lequel :
- l'amiante comprise dans le déchet traité est une amiante de type amphibole ;
- la solution obtenue à l'issue de la dissolution acide de l'amiante est valorisée.

En ce qui concerne la valorisation, une seule voie est possible, la transformation de l'amiante en « vitrifiât », matériau réutilisé dans le bâtiment et les travaux publics (en sous couche routière) et vendu à 10€ HT la tonne (hors transport).

On connaît le document JP 2008 253856, qui décrit un véhicule de station de traitement de l'amiante capable de retenir un risque de dispersion de l'amiante, même lors d'un éventuel transit. Ce véhicule est pourvu d'un réservoir qui est utilisé pour traiter des déchets de matériaux de construction contenant de l'amiante et un moyen pour aspirer les déchets contenant de l'amiante dans un réservoir; un agent de traitement composé d'un acide inorganique et un composé contenant du fluor pour traiter les déchets logés dans le réservoir et un moyen de mélange et agitation pour faire réagir les déchets avec l'agent de traitement présent dans le réservoir.

On connaît aussi le document FR 2 930 893, qui décrit un procédé de traitement d'un solide amianté, comprenant au moins une étape de traitement acide à chaud, de l'amiante du solide amianté à pression atmosphérique par une solution aqueuse d'acide chlorhydrique à une température voisine de la température d'ébullition de façon à obtenir, une solution non silicique d'au moins un constituant non silicique de l'amiante et un solide silicique. Dans ce procédé, on soumet la solution non silicique à un traitement de précipitation sélective des espèces cationiques du fer.

### Objet de l'invention

La présente invention vise à remédier à tout ou partie de ces inconvénients.

A cet effet, selon un premier aspect, la présente invention vise un système de neutralisation d'amiante, qui comporte une unité mobile de neutralisation comportant :
- un module de tri de déchets d'amiante,
- un broyeur d'amiante et
- un bain d'acide chaud pour rendre l'amiante inerte.

Cette approche mobile permet donc non seulement d'apporter une solution à l'amorphisation de l'amiante, mais aussi de réduire les coûts puisqu'on évite la mise en dépôt spécifique et le transport d'amiante puisque l'amiante n'existe plus. Or, le transport et la mise en dépôt de matières dangereuses comme l'amiante sont soumis à une règlementation rigoureuse et complexe qui rend l'ensemble très coûteux.

Dans des modes de réalisation, le module de tri de déchets d'amiante comporte :
- un vitre munie de boîtes à gants et
- un convoyeur pour transporter les déchets d'amiante devant la vitre

Grâce à ces dispositions, les opérateurs qui effectuent le tri n'ont pas besoin de porter de tenue spéciale, ni de suivre une procédure complexe d'entrée dans une atmosphère dangereuse.

Dans des modes de réalisation, le système objet de la présente invention comporte un moyen de confinement de l'atmosphère dans l'unité mobile de neutralisation.

Grâce à ces dispositions, on réduit, voire élimine, le risque que des particules d'amiante ne s'échappent de l'unité mobile.

Dans des modes de réalisation, le bain d'acide chaud de l'unité mobile de neutralisation comporte de l'acide sulfurique.

L'acide sulfurique a l'avantage de présenter un coût de revient réduit et de réagir avec toutes les variétés d'amiante commercialisées.

Dans des modes de réalisation, l'acide chaud est porté dans le bain d'acide chaud de l'unité mobile de neutralisation à une température comprise entre 70 °C et 100 °C.

Dans des modes de réalisation, 6. Système selon la revendication 5, dans lequel l'acide chaud est porté dans le bain d'acide chaud de l'unité mobile de neutralisation à une température comprise entre 80 °C et 100 °C.

Grâce à chacune de ces dispositions, la réaction chimique est rapide et efficace.

Dans des modes de réalisation, le système objet de la présente invention comporte une remorque de véhicule formant support de l'unité mobile de neutralisation.

Grâce à ces dispositions, la mise sur chantier de l'unité mobile est facilitée, le déplacement de l'unité mobile de neutralisation étant possible sur le réseau routier.

On note que la remorque est préférentiellement équipée d'une baie technique permettant non seulement de faire fonctionner l'ensemble dans les conditions de sécurité conformes aux règlementations en vigueur, mais aussi de surveiller/contrôler/piloter/enregistrer l'ensemble des paramètres de fonctionnement de l'unité mobile de neutralisation afin de pouvoir répondre à tout moment à un contrôle sanitaire et effectuer des opérations de maintenance ou de réparation.

Dans des modes de réalisation, le système objet de la présente invention comporte un bateau formant support de l'unité mobile de neutralisation.

Grâce à ces dispositions, le désamiantage d'un bateau est facilité, le bateau portant l'unité mobile pouvant accoster à proximité du, voire contre le, bateau à désamianter.

Dans des modes de réalisation, le système objet de la présente invention comporte un véhicule muni d'un moteur, le bain d'acide chaud étant chauffé par le moteur du véhicule.

Grâce à ces dispositions, l'unité mobile n'a pas à comporter de moteur et est donc plus simple et moins coûteuse.

Dans des modes de réalisation, le système objet de la présente invention comporte un groupe électrogène, le bain d'acide chaud étant chauffé par un moyen de chauffage électrique alimenté par le groupe électrogène.

Grâce à ces dispositions, un véhicule portant l'unité mobile peut fournir l'électricité à l'unité mobile.

Dans des modes de réalisation, l'unité mobile tient dans un container standard de 40 pieds de long.

Grâce à ces dispositions, l'unité mobile peut facilement être transportée par camion, train, bateau ou avion.

Dans des modes de réalisation, l'unité mobile de neutralisation (200) comporte, de plus :
- une cuve à eau propre ;
- une cuve à eaux usées ;
- une cellule de décontamination pour opérateur ;
- une cellule d'introduction de déchets amiantifères et
- un sas d'évacuation de déchets non amiantifères issus du tri.

Les cuves d'eau propre et d'eau usée permettent que l'ensemble des déchets amiantifères soient traités par voie humide, par ajout d'eau claire, afin de limiter la mise en suspension de poussières d'une part, et de fluidiser la circulation des déchets, d'autre part.

Dans des modes de réalisation, le module de tri des déchets d'amiante comporte :
- un établi de travail,
- un convoyeur et
- une unité de détection de métaux.

Grâce à ces dispositions, on effectue ainsi un tri efficace, tout en réduisant les efforts de l'opérateur chargé du tri. De plus, des métaux qui pourraient polluer le bain acide sont détectés et retirés avant introduction des déchets d'amiante dans le bain d'acide chaud.

Dans des modes de réalisation, le bain d'acide chaud est contenu dans une cuve calorifugée amovible de l'unité mobile de neutralisation.

Grâce à ces dispositions l'approvisionnement de l'unité mobile est aisé et la continuité de son exploitation peut être assurée par remplacement complet de la cuve.

On remplace ainsi l'acide autant que de besoin, et on retire des résidus de neutralisation d'amiante. Préférentiellement, l'eau propre est réapprovisionnée et l'eau usée est évacuée simultanément au changement de bain d'acide.

Dans cette approche de traitement des déchets amiantés, les unités mobiles restent à poste sur chantier durant la durée du chantier et sont simplement approvisionnées en cuves d'eau propre et d'acide « neuves » et leurs cuves usagées récupérées et transportées à une usine de traitement sur des camions « standard ».

Dans des modes de réalisation, le système objet de la présente invention comporte un véhicule d'approvisionnement comportant :
- un moyen de dépôt d'une cuve de l'unité mobile de neutralisation contenant le bain d'acide usé,
- un moyen de chargement d'une cuve d'acide préchauffé dans l'unité mobile de neutralisation,
- un moyen de vidange d'une cuve d'eaux usées ou échange d'une cuve d'eau usée avec une cuve vide,
- un moyen de remplissage d'une cuve d'eau propre ou d'échange d'une cuve d'eau propre.

Grâce à ces dispositions l'approvisionnement de l'unité mobile est aisé et la continuité de son exploitation peut être assurée par remplacement complet de la cuve.

Ce véhicule participe à l'approche de traitement des déchets amiantés dans laquelle les unités mobiles restent à poste sur chantier durant la durée du chantier et sont simplement approvisionnées en consommables, eau propre et acide neuf et l'eau usée et l'acide usé sont récupérées et transportés à une usine de traitement sur des camions « standard ».

Dans des modes de réalisation, le système objet de la présente invention comporte une unité fixe d'approvisionnement comportant :
- un moyen de dépôt d'une cuve de l'unité mobile de neutralisation contenant le bain d'acide usé,
- un moyen de chargement d'une cuve d'acide préchauffé dans l'unité mobile de neutralisation,
- un moyen de vidange d'une cuve d'eaux usées ou échange d'une cuve d'eau usée avec une cuve vide,
- un moyen de remplissage d'une cuve d'eau propre ou d'échange d'une cuve d'eau propre et
- un moyen de transfert de données de fonctionnement de l'unité mobile de neutralisation depuis l'unité mobile de neutralisation vers une base de données sécurisée de l'unité fixe.

Grâce à ces dispositions l'approvisionnement de l'unité mobile est aisé par retour de l'unité mobile auprès de l'unité fixe et remplacement complet de la cuve.

Dans des modes de réalisation, l'unité fixe d'approvisionnement comporte une unité de chauffage du bain acide par micro-ondes.

Grâce à ces dispositions, la consommation électrique de l'unité mobile est réduite.

Dans des modes de réalisation, le système objet de la présente invention comporte un moyen d'extraction de magnésium d'une fraction liquide issue du bain d'acide usé.

Grâce à ces dispositions, le magnésium est valorisé.

Dans des modes de réalisation, le bain d'acide comporte de l'acide sulfurique, le système objet de la présente invention comportant un moyen de production d'anhydrite à partir des produits solides issus de la réaction se produisant dans le bain d'acide chaud.

Dans des modes de réalisation, le système objet de la présente invention comporte un moyen de production de matériaux présentant des mésopores dont au moins 10 % présentent un diamètre inférieur à 20 Å.

Grâce à chacune de ces dispositions, la fraction solide issue de la réaction dans le bain d'acide fournit un matériau valorisable.

Dans des modes de réalisation, le bain d'acide comporte de l'acide sulfurique, qui comporte un moyen de production de sulfate de magnésium à partir des produits solides issus de la réaction se produisant dans le bain d'acide chaud.

On réalise ainsi une valorisation du magnésium contenu dans la fraction liquide issue de l'attaque acide, obtenue après traitement des déchets d'amiante. En effet, cette partie liquide contient la quasi-totalité du magnésium (dissout) qui constituait l'amiante.

De densité plus faible que tous les éléments métaux, le magnésium possède des caractéristiques qui s'apparentent à celles de l'aluminium, mais il est 34 % plus léger que celui-ci et 70 % plus léger que l'acier. Il se présente ainsi comme la solution idéale pour répondre aux exigences de légèreté pour les nouveaux standards de l'industrie des transports.

En plus de son excellent rapport densité/résistance à la traction, le magnésium présente d'autres caractéristiques intéressantes :

Compte tenu de sa structure cristalline, le magnésium possède une excellente capacité de réduction de la transmission de vibrations (le magnésium absorbe 16 fois plus de chocs que l'aluminium).

Le magnésium présente d'excellentes propriétés de protection électromagnétique. Un mur d'un millimètre d'épaisseur réduit de 80 % la transmission électromagnétique.

Enfin, le magnésium a un effet moins agressif que l'aluminium sur les moules en acier, permettant ainsi de prolonger la durée de vie des outils.

Dans des modes de réalisation, le système objet de la présente invention comporte un moyen de fabrication de zéolithes à partir d'une fraction solide issue du bain d'acide usé.

Lors de l'attaque à l'acide, l'acide réagit avec les groupements hydroxyles (OH)- des feuillets de brucite Mg(OH)₂ ce qui entraîne leur disparition (dissolution du Mg) et donc l'amorphisation des déchets d'amiante qui se transforment en un solide inerte constitué de silice amorphe.

La matière solide inerte obtenue est valorisée par la fabrication de matériaux fonctionnels tels que les zéolithes.

La zéolithe est un minéral naturel (roche volcanique) appartenant au groupe des aluminosilicates hydratés. Les zéolithes sont des solides microporeux cristallisés dont la charpente minérale tridimensionnelle présente des canaux et des cavités (pores) communiquant avec le milieu extérieur, dont le diamètre est inférieur à 2 nm (soit 2.10⁻⁹ m).

L'ensemble des ouvertures confère aux zéolithes des propriétés très intéressantes dans divers domaines industriels tels que l'adsorption, la catalyse ou l'échange ionique.

Selon un deuxième aspect, la présente invention vise un procédé de neutralisation d'amiante, qui comporte :
- une étape de mise sur chantier de désamiantage d'une unité mobile de neutralisation comportant :
   - un module de tri de déchets d'amiante,
   - un broyeur d'amiante et
   - un bain d'acide chaud pour rendre l'amiante inerte ;
- une étape de tri de déchets d'amiante dans le module de tri de l'unité mobile de neutralisation ;
- une étape de broyage d'amiante par le broyeur de l'unité mobile de neutralisation ;
- une étape d'attaque de l'amiante avec l'acide chaud du bain d'acide chaud de l'unité mobile de neutralisation et
- une étape d'extraction de magnésium de la fraction liquide issue de l'attaque d'amiante avec l'acide chaud et/ou de fabrication de zéolithes à partir de la fraction solide issue de l'attaque d'amiante avec l'acide chaud.

Les avantages, buts et caractéristiques particulières de ce procédé étant similaires à ceux du système objet de la présente invention, ils ne sont pas rappelés ici.

Dans des modes de réalisation, au cours de l'étape de tri de déchets d'amiante, on trie des déchets de fibrociment.

Grâce à ces dispositions, on obtient des matériaux présentant des qualités mécaniques appréciables.

### Brève description des figures

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement, une structure d'amiante, avant traitement,
- la figure 2 représente, schématiquement, la structure d'amiante illustrée en figure 1, après traitement par attaque acide,
- la figure 3 représente, sous forme de schéma fonctionnel, le procédé objet de la présente invention,
- la figure 4 représente, sous forme de schéma opérationnel, un premier mode de réalisation d'une unité de traitement d'amiante,
- la figure 5 représente, en vue de dessus, un premier mode de réalisation d'une unité mobile de neutralisation,
- la figure 6 représente, en vue de côté, un bateau muni d'une unité mobile de neutralisation objet de la présente invention,
- la figure 7 est une vue en perspective, d'un deuxième mode de réalisation d'une unité mobile de neutralisation d'amiante,
- la figure 8 est une première vue en perspective d'un camion équipé d'un troisième mode de réalisation d'une unité mobile de neutralisation d'amiante et
- la figure 9 est une deuxième vue en perspective du camion illustré en figure 8.

### Description d'exemples de réalisation de l'invention

On note, dès à présent, que les figures ne sont pas à l'échelle.

La présente invention concerne un système de neutralisation qui comporte une unité mobile de neutralisation et, dans des modes de réalisation, une unité d'approvisionnement, fixe ou mobile, de l'unité mobile de neutralisation et/ou une unité de traitement des produits fournis par l'unité mobile de neutralisation.

L'unité mobile de neutralisation utilise une approche d'amorphisation l'amiante (quelle que soit sa forme amphibole ou serpentine) dans des délais réduits (moins de 24 heures dans tous les cas) en immergeant de l'amiante dans un bain acide à des températures inférieures à 104 °C, préférentiellement inférieurs à 100°C, préférentiellement supérieures à 70 °C et, encore plus préférentiellement, supérieures à 80 °C.

Chaque unité mobile de neutralisation est positionnée sur chantier de désamiantage ou à proximité du chantier, notamment quand il s'agit d'un bateau à désamianter, afin de :
- trier les déchets d'amiante
- les broyer et
- rendre l'amiante inerte dans un bain d'acide chaud.

L'acide utilisé est de façon préférentielle de l'acide sulfurique, qui permet une meilleure valorisation des produits de la réaction.

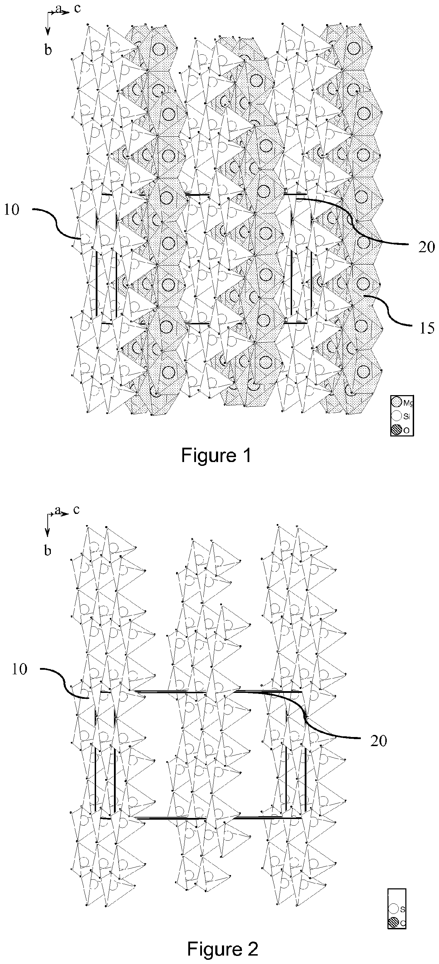

D'un point de vue cristallographique, comme illustré en figure 1, le chrysotile se présente sous forme d'un empilement de feuillets de silicates 10 (structure tridymite) reliés par des liaisons 20, et de feuillets de brucite Mg(OH)₂ 15.

Lors de l'attaque à l'acide, l'acide réagit avec les groupements hydroxyles (OH)- des feuillets de brucite Mg(OH)₂ 15 ce qui entraîne leur disparition (dissolution du Mg) et donc l'amorphisation des déchets d'amiante qui se transforment en un solide inerte constitué de silice amorphe. Comme illustré en figure 2, la fraction solide résiduelle ne comporte que la silice amorphe 10 et les liaisons 20.

Le transport et la mise en dépôt de matières dangereuses comme l'amiante sont soumis à une règlementation rigoureuse et complexe qui rend l'ensemble fort coûteux. La nouvelle approche mobile permet donc non seulement d'apporter une solution à l'amorphisation de l'amiante, mais aussi de réduire les coûts (plus de transport d'amiante puisque l'amiante n'existe plus et plus de mise en dépôt).

L'ensemble est constitué d'une unité mobile de neutralisation et, dans des modes de réalisation :
- d'une remorque, préférentiellement d'environ douze mètres de long, conforme à la règlementation en vigueur en matière de convois non exceptionnels, qui supporte l'unité mobile de neutralisation tant pendant son transport que pendant son fonctionnement,
- d'un camion assurant les mêmes fonctions,
- d'un bateau, de transport et/ou de support pendant le fonctionnement de l'unité mobile ou
- d'un support fixe sur chantier.

L'unité mobile de neutralisation tient, de façon avantageuse, dans un container de 40 pieds standard. Ceci permet de charger l'unité mobile de neutralisation sur une remorque, sur un train, un navire, voire même un avion.

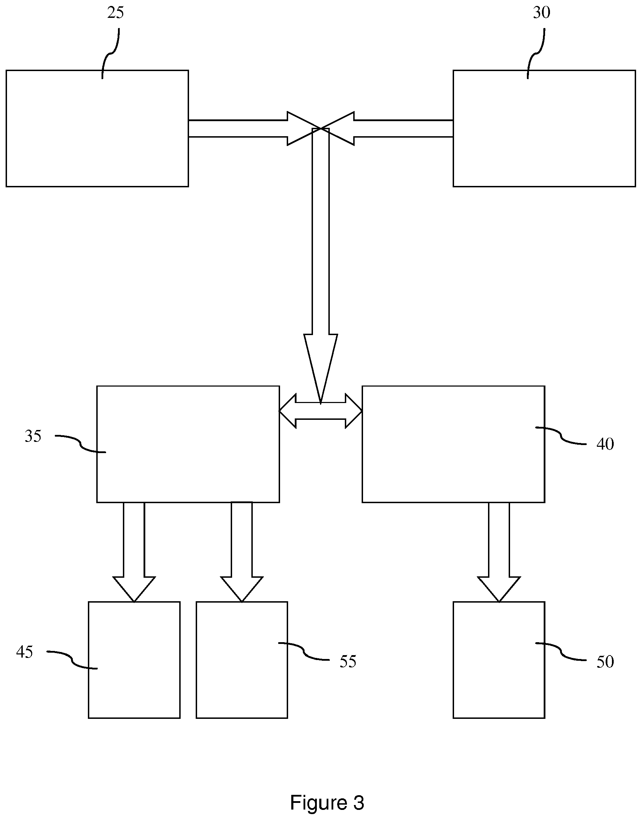

Comme illustré en figure 3, le procédé objet de la présente invention consiste à faire réagir de l'acide 25 avec des déchets d'amiante 30, pour produire une phase solide inerte 35 composée de silice et une phase liquide comportant du magnésium 40, par exemple un sel de magnésium. Selon des modes de réalisation, la phase solide 35 est traitée pour fournir des zéolithes 45 et/ou des anhydrites 55 et/ou la phase liquide 40 est traitée pour extraire du magnésium ou un composé du magnésium 50.

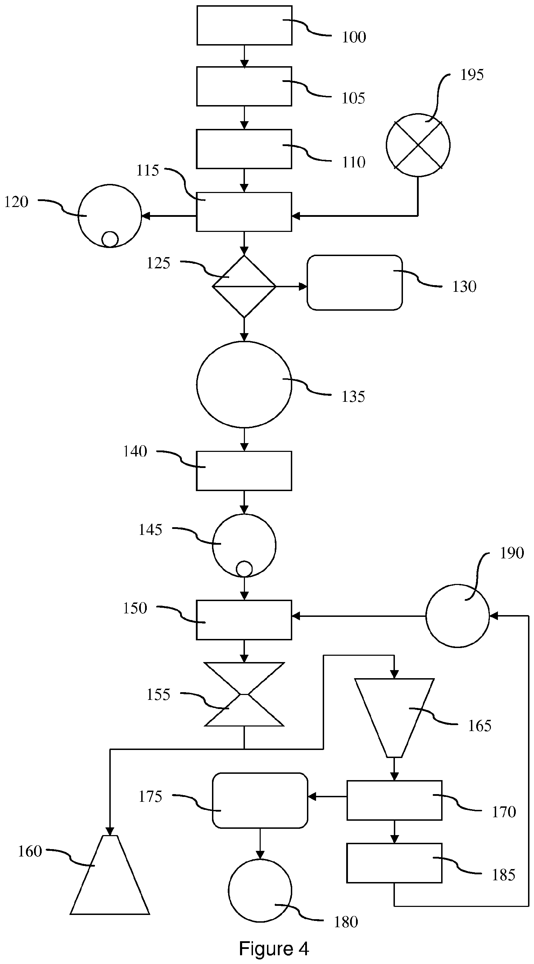

Comme illustré en figure 4, le procédé comporte :
- une étape 100 de mise sur ou à proximité du chantier de désamiantage d'une unité mobile de neutralisation, par exemple telle que décrite dans les autres figures),
- une étape d'arrivée de déchets 105,
- une étape de pesage des déchets 110,
- une étape 115 de déballage des déchets et d'ajout d'eau provenant d'un réservoir 195 pour réduire les risques de pollution aérienne,
- une étape de stockage des emballages pollués 120,
- une étape de tri visuel et par détecteur de métaux 125,
- une étape de stockage des déchets stériles ou comportant du métal 130,
- une étape de stockage de l'amiante trié 135,
- une étape de broyage de l'amiante 140,
- une étape 145 de stockage de l'amiante broyé,
- une étape 150 de réaction, dans un bain, de l'amiante broyé et d'acide provenant d'un réservoir 190 ; on neutralise ainsi les déchets l'amiante, par voie chimique, à moindre coût, notamment en cas d'attaque des déchets avec de l'acide sulfurique H₂SO₄ (par exemple pur à 96%), peu onéreux,
- une étape de filtration du bain usé 155,
- une étape 160 d'extraction de la fraction solide du bain usé, avec une éventuelle valorisation sous forme de zéolithes,
- une étape 165 d'extraction de la fraction liquide du bain usé,
- une étape 170 de précipitation des composés magnésiens et, éventuellement, de neutralisation d'acide,
- une étape de concentration des composés magnésiens 175,
- une étape de stockage des composés magnésiens 180 et
- une étape de recyclage du bain usé 185 pour alimenter le réservoir d'acide 190.

On note que la valorisation de la phase solide n'est pas décrite en figure 4.

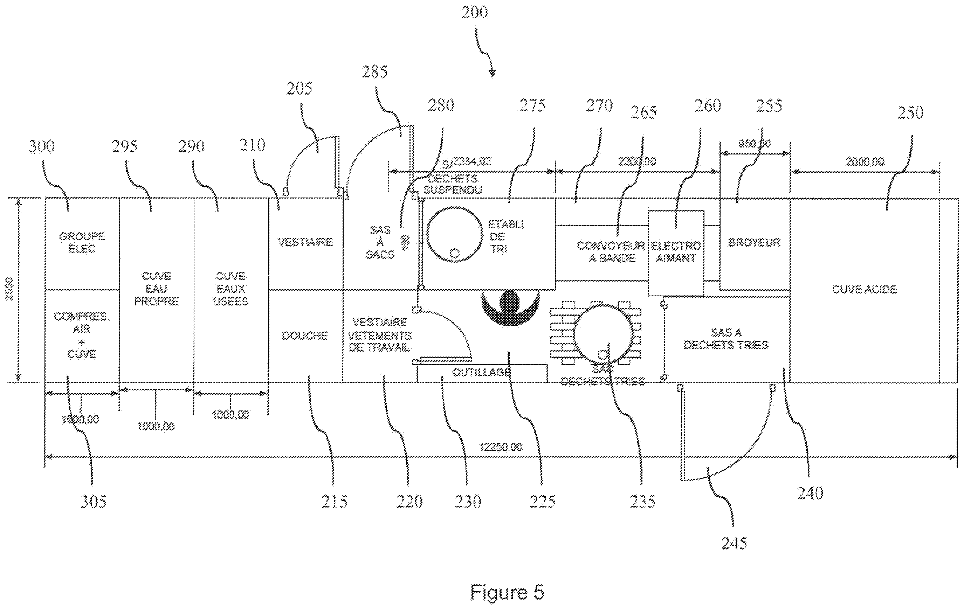

L'unité mobile de neutralisation 200 illustrée en figure 5 comporte :
- une porte d'entrée 205 d'opérateurs vers un vestiaire 210,
- une douche 215,
- un vestiaire de vêtements de travail 220,
- un module, ou atelier, de tri 225,
- une cuve amovible de bain d'acide 250,
- une cellule (sas) d'introduction de sacs de déchets amiantifères 280 muni d'une porte extérieure 285,
- une cuve d'eaux usées 290,
- une cuve d'eau propre 295,
- un groupe électrogène 300 et
- un compresseur d'air 305 muni d'un réservoir d'air comprimé.

Le vestiaire 210, la douche 215 et le vestiaire 220 constituent conjointement une cellule de décontamination pour opérateur.

Le module 225 de tri des déchets comporte :
- un établi de travail 275,
- un convoyeur à bande 265,
- une unité de détection de métaux 260,
- le broyeur 255,
- une armoire à outillages 230,
- un récipient pour déchets triés 235 non amiantifères (après tri) et
- un sas 240 d'évacuation de déchets non amiantifères muni d'une porte extérieure 245.

Le module 225, ou atelier, de tri est équipé d'un circuit 270 de circulation d'air, mettant le module 225 en dépression, pour interdire la diffusion de particules d'amiante en dehors de l'unité mobile de neutralisation par voie aérienne.

L'atmosphère est ainsi confinée dans l'unité mobile de neutralisation 200.

L'ensemble des déchets amiantifères sont traités par voie humide (ajout d'eau claire, non représentée) afin de limiter la mise en suspension de poussières d'une part et de fluidiser la circulation des déchets d'autre part.

Après broyage, les déchets amiantifères sont introduits à travers un circuit étanche (non représenté) dans une cuve calorifugée d'acide chaud pour destruction. Cette cuve est amovible, permettant un remplacement autant que de besoin. Il en est de même des cuves d'eau propre et usées.

L'unité mobile de neutralisation 200 est, par ailleurs, équipée d'une baie technique (non représentée) permettant non seulement de faire fonctionner l'ensemble de ses composants dans les conditions de sécurité conformes aux règlementations en vigueur, mais aussi de surveiller/contrôler/piloter/enregistrer l'ensemble de ces paramètres afin de pouvoir répondre à tout moment à un contrôle sanitaire.

En complément des unités mobiles, le système de neutralisation peut comporter au moins une unité fixe, ou usine (non représentée) d'approvisionnement en cuves acides chaudes. L'amenée d'une unité mobile de neutralisation à l'unité fixe se traduit donc par l'enchaînement d'actions simples :
- dépôt de la cuve contenant les déchets,
- chargement d'une cuve « neuve » (acide préchauffé),
- vidange de la cuve d'eaux usées ou échange avec une cuve vide,
- remplissage de la cuve d'eau propre ou échange et
- connexion sur le système de pilotage de l'unité mobile de neutralisation pour stockage des données de fonctionnement de l'unité mobile de neutralisation sur une base de données sécurisée fixe au sein de l'usine.

L'unité fixe pour approvisionner une unité mobile de neutralisation comporte :
- un moyen de dépôt d'une cuve de l'unité mobile de neutralisation contenant le bain d'acide usé,
- un moyen de chargement d'une cuve d'acide préchauffé dans l'unité mobile de neutralisation,
- un moyen de vidange d'une cuve d'eaux usées ou échange d'une cuve d'eau usée avec une cuve vide,
- un moyen de remplissage d'une cuve d'eau propre ou d'échange d'une cuve d'eau propre et
- un moyen de transfert de données de fonctionnement de l'unité mobile de neutralisation depuis l'unité mobile de neutralisation vers une base de données sécurisée de l'unité fixe.

Préférentiellement, l'unité fixe comporte un moyen d'extraction de magnésium d'une fraction liquide issue du bain d'acide usé.

Préférentiellement, l'unité fixe comporte aussi un moyen de fabrication de zéolithes à partir d'une fraction solide issue du bain d'acide usé.

Dans des modes de réalisation, l'unité fixe comporte un chauffage à micro-ondes du bain acide, la cuve à acide étant calorifugée pour conserver la chaleur.

Dans d'autres modes de réalisation, les unités mobiles restent à poste sur chantier durant la durée du chantier et sont simplement approvisionnées en cuves d'eau propre et d'acide « neuves » et leurs cuves usagées récupérées et transportées à l'usine de traitement sur des camions « standard ».

Le véhicule (non représenté) pour approvisionner une unité mobile de neutralisation comporte :
- un moyen de dépôt d'une cuve de l'unité mobile de neutralisation contenant le bain d'acide usé,
- un moyen de chargement d'une cuve d'acide préchauffé dans l'unité mobile de neutralisation,
- un moyen de vidange d'une cuve d'eaux usées ou échange d'une cuve d'eau usée avec une cuve vide,
- un moyen de remplissage d'une cuve d'eau propre ou d'échange d'une cuve d'eau propre.

L'unité mobile de neutralisation et le véhicule d'approvisionnement ressemblent extérieurement à des semi-remorques frigorifiques (enceintes closes), à des camions ou à des bateaux de transport connus.

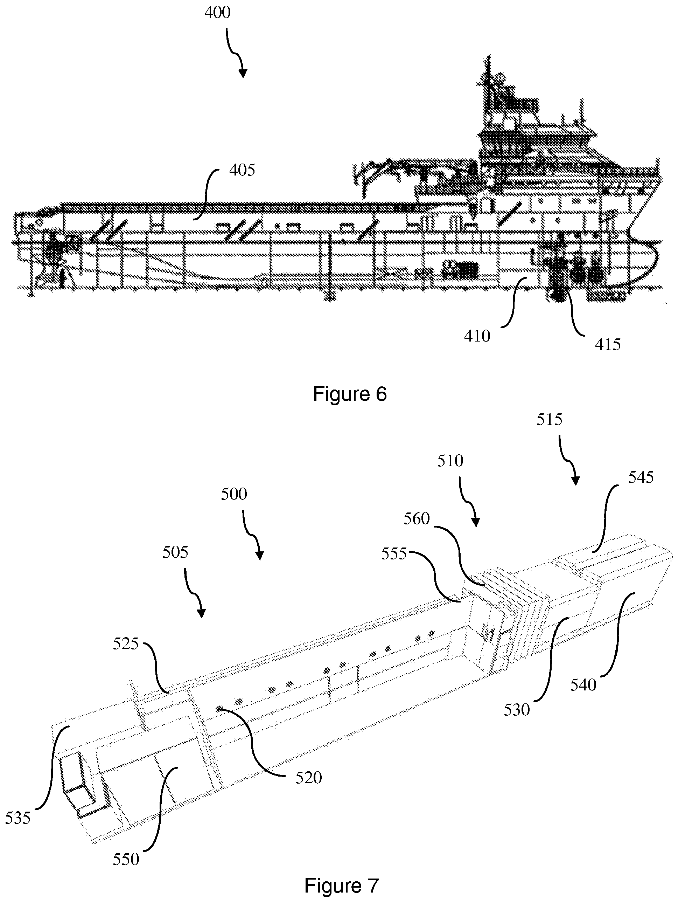

On observe, en figure 6, un bateau usine composé d'un bateau de transport 400 (« supply boat ») transportant au moins une unité mobile de neutralisation 405. Ce bateau 400 comporte un moteur 415 et un groupe électrogène 410 mu par le moteur 415. L'alimentation électrique de chaque unité mobile de neutralisation 405 est réalisée par le groupe électrogène 410.

On note que le bateau 400 peut porter à la fois au moins une unité mobile de neutralisation 405 et des cuves de remplacement de l'acide du réservoir d'eau pure et du réservoir d'eau usée.

Dans les modes de réalisation illustrés en figures 7 à 9, les opérateurs travaillent devant une vitre, ils sont en tenue standard ne nécessitant pas de revêtir une tenue de travail "amiante".

En figure 7, une unité mobile de neutralisation d'amiante 500 comporte :
- un caisson de tri 505, par exemple tenant dans un container standard de 40 pieds de long,
- une articulation 510, par exemple à soufflet, et
- un caisson de traitement 515, par exemple tenant dans un container standard de 20 pieds de long.

Des postes à boîtes à gants 520 séparés par une vitre d'un convoyeur 525 simplifient considérablement les opérations puisque les opérateurs n'ont pas de passage en zone stérile (habillage douche déshabillage ...) à effectuer.

L'unité mobile de neutralisation 500 comporte :
- un module, ou atelier, de tri à convoyeur 525,
- une cuve amovible de bain d'acide 530,
- une cellule (sas) d'introduction de sacs de déchets amiantifères 535 muni d'une porte extérieure (non représentée),
- une cuve d'eaux usées 540,
- une cuve d'eau propre 545,
- un compresseur d'air 550 muni d'un réservoir d'air comprimé,
- une unité de détection de métaux 555,
- le broyeur 560,
- un récipient pour déchets triés non amiantifères (non représenté) et
- un sas d'évacuation de déchets non amiantifères (non représenté) muni d'une porte extérieure.

On rappelle ici qu'une boîte à gants est une enceinte étanche qui permet des manipulations dans une atmosphère particulière. Des gants, pour les seules mains et poignes, ou montant jusqu'aux coudes ou aux épaules, fixés à une paroi étanche, permettent d'accéder à l'intérieur sans que le confinement ne cesse. L'utilisateur place ses mains dans les gants et voit alors ses manipulations à travers la paroi transparente.

Ainsi, l'unité mobile de neutralisation n'embarque pas de personnel de tri à l'intérieur de la zone confinée. Le personnel de tri n'est ainsi pas soumis aux contraintes légales de travail en atmosphère dangereuse, et la cellule de décontamination peut être réduite, voire même supprimée.

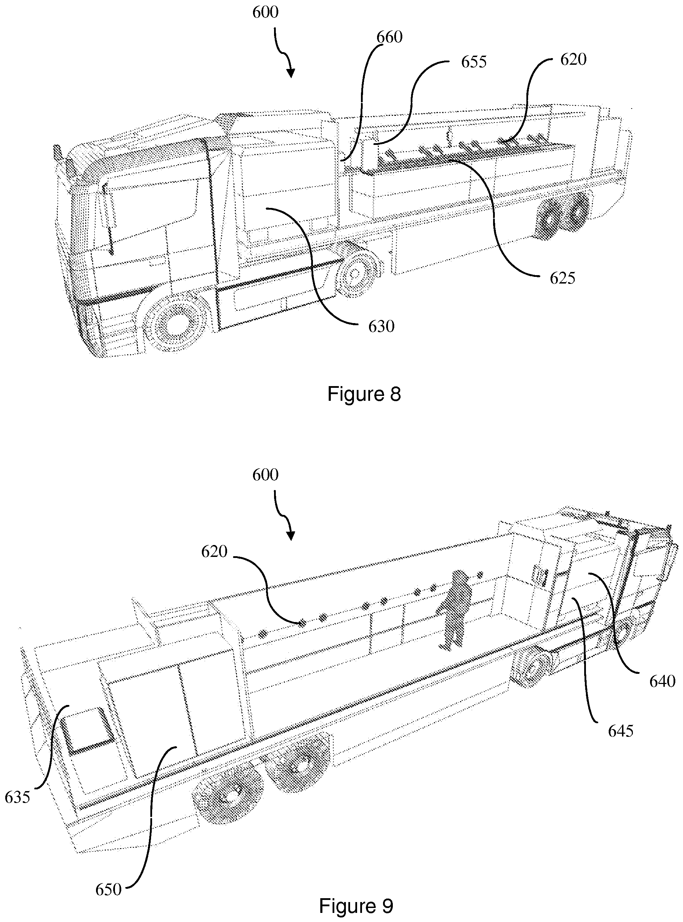

En figures 8 et 9, une unité mobile de neutralisation d'amiante 600 comporte des postes à boîtes à gants 620 séparés par une vitre d'un convoyeur 625 simplifient considérablement les opérations puisque les opérateurs n'ont pas de passage en zone stérile (habillage douche déshabillage ...) à effectuer.

L'unité mobile de neutralisation 600 comporte :
- un module, ou atelier, de tri à convoyeur 625,
- une cuve amovible de bain d'acide 630,
- une cellule 635 (sas) d'introduction de sacs de déchets amiantifères muni d'une porte extérieure (non représentée),
- une cuve d'eaux usées 640,
- une cuve d'eau propre 645,
- un compresseur d'air 650 muni d'un réservoir d'air comprimé,
- une unité de détection de métaux 655,
- le broyeur 660,
- un récipient pour déchets triés non amiantifères (non représenté) et
- un sas d'évacuation de déchets non amiantifères (non représenté) muni d'une porte extérieure.

Le fait d'utiliser de l'acide sulfurique au lieu de chlorhydrique a deux avantages :
- c'est actuellement l'acide le moins cher et sa production industrielle est élevée (pas de risque de manque de fournisseurs)
- la phase liquide obtenue après attaque acide est un sulfate de magnésium, très utile dans de nombreuses industries, par exemple pour entrer dans la composition d'engrais agricole.

On donne, ci-après une description de voies de valorisation possibles offertes au solide inerte obtenu suite à l'attaque à l'acide chaud.

A la suite du traitement acide à chaud, le solide inerte obtenu est susceptible de convenir à différentes voies de valorisation selon la nature du déchet initial duquel il est issu.

En effet, les matériaux contenant de l'amiante libre, tels que les cordons tressés, ont des taux d'amiante très élevés et permettent, suite à l'attaque acide à chaud, d'obtenir majoritairement la silice (SiO₂) en quantité importante permettant ainsi la fabrication des zéolithes.

Les matériaux contenant de l'amiante lié (10 à 20% d'amiante), tels que les tôles ondulées en fibrociment, ont une composition chimique en oxyde de calcium (la chaux (CaO) et en silice (SiO₂) de 40 % et 19% respectivement. Cette composition est très proche de celle des ciments Portland (marque déposée). L'attaque de ces matériaux par l'acide sulfurique à chaud permet d'avoir majoritairement du sulfate de calcium CaSO₄ appelé aussi Anhydrite. Ce composé se forme en proportion dominante en mélange avec la silice. L'anhydrite est un additif essentiel dans chaîne de fabrication du ciment.

On souligne ici l'importance du rôle de l'acide sulfurique comme espèce déterminante pour l'obtention de l'anhydrite car l'usage d'autres acides tels que l'acide chlorhydrique ne permet pas d'avoir le même résultat.

Dans certains cas, l'attaque acide sur le déchet de départ conduit à la formation d'un solide inerte comportant des mésopores (répartition des diamètres des pores : 75 % de macro et de mésopores de diamètre supérieur à 20 À et 25 % de micro pores de diamètre inférieur à 20 À, et génère une augmentation de l'aire de sa surface spécifique BET. Plus généralement, la présente invention permet la production de produits présentant des mésopores dont au moins 10 % présentent un diamètre inférieur à 20 Å.

Ces caractéristiques (structure macro et mésoporeuse associée à la morphologie fibreuse) donne au solide inerte des propriétés mécaniques remarquables, par exemple permettant l'absorption et/ou le brouillage d'une onde de choc, par exemple pour des matériaux énergétiques (fabricants d'explosifs) et l'isolation acoustique par des barrières d'atténuation.

D'autres applications sont envisagées pour le solide intermédiaire inerte, par exemple dans le domaine de la filtration des eaux, applications dans lesquelles la distribution granulométrique pourrait fournir de bons supports bactériens.

## Revendications

1. Système de neutralisation d'amiante qui comporte une unité mobile de neutralisation (200) comportant :
- un broyeur (255) d'amiante et
- un bain (250) d'acide chaud pour rendre l'amiante inerte et **caractérisé en ce qu'**il comporte un module (225) de tri de déchets d'amiante.

2. Système selon la revendication 1, dans lequel le module de tri de déchets d'amiante comporte :
- un vitre munie de boîtes à gants et
- un convoyeur pour transporter les déchets d'amiante devant la vitre

3. Système selon l'une des revendications 1 ou 2, qui comporte un moyen de confinement de l'atmosphère dans l'unité mobile de neutralisation.

4. Système selon l'une des revendications 1 à 3, dans lequel le bain (250) d'acide chaud de l'unité mobile de neutralisation (200) comporte de l'acide sulfurique.

5. Système selon l'une des revendications 1 à 4, dans lequel l'acide chaud est porté dans le bain (250) d'acide chaud de l'unité mobile de neutralisation (200) à une température comprise entre 70 °C et 100 °C.

6. Système selon l'une des revendications 1 à 5, qui comporte
- une remorque de véhicule formant support de l'unité mobile de neutralisation (200) ou
- un bateau formant support de l'unité mobile de neutralisation (200).

7. Système selon l'une des revendications 1 à 6, qui comporte un véhicule muni d'un moteur, le bain d'acide chaud étant chauffé par le moteur du véhicule.

8. Système selon l'une des revendications 1 à 7, dans lequel l'unité mobile de neutralisation (200) comporte, de plus :
- une cuve à eau propre (295) ;
- une cuve à eaux usées (290) ;
- une cellule (210, 215, 220) de décontamination pour opérateur ;
- une cellule (280) d'introduction de déchets amiantifères et
- un sas (240) d'évacuation de déchets non amiantifères issus du tri.

9. Système selon l'une des revendications 1 à 8, dans lequel le module de tri des déchets d'amiante (225) comporte :
- un établi de travail (275),
- un convoyeur (265) et
- une unité de détection de métaux (260).

10. Système selon l'une des revendications 1 à 9, qui comporte un moyen d'extraction de magnésium d'une fraction liquide issue du bain d'acide usé (250).

11. Système selon l'une des revendications 1 à 10, dans lequel le bain d'acide comporte de l'acide sulfurique, qui comporte un moyen de production d'anhydrite à partir des produits solides issus de la réaction se produisant dans le bain d'acide chaud.

12. Système selon l'une des revendications 1 à 11, qui comporte un moyen de production de matériaux présentant des mésopores dont au moins 10 % présentent un diamètre inférieur à 20 Å.

13. Système selon l'une des revendications 1 à 12, dans lequel le bain d'acide comporte de l'acide sulfurique, qui comporte un moyen de production de sulfate de magnésium à partir des produits solides issus de la réaction se produisant dans le bain d'acide chaud.

14. Système selon l'une des revendications 11 à 13, qui comporte un moyen de fabrication de zéolithes à partir d'une fraction solide issue du bain d'acide usé (250).

15. Procédé de neutralisation d'amiante comportant:
- une étape (100) de mise sur chantier de désamiantage d'une unité mobile de neutralisation comportant :
- un module (225) de tri de déchets d'amiante,
- un broyeur (255) d'amiante et
- un bain (250) d'acide chaud pour rendre l'amiante inerte ;
- une étape de tri de déchets d'amiante (125) dans le module de tri de l'unité mobile de neutralisation ;
- une étape de broyage d'amiante (140) par le broyeur de l'unité mobile de neutralisation ;
- une étape d'attaque de l'amiante avec l'acide chaud (150) du bain d'acide chaud de l'unité mobile de neutralisation et
- une étape d'extraction (165 à 180) de magnésium de la fraction liquide issue de l'attaque d'amiante avec l'acide chaud et/ou de fabrication de zéolithes (160) à partir de la fraction solide issue de l'attaque d'amiante avec l'acide chaud.

## Patentansprüche

1. System zur Neutralisierung von Asbest, **dadurch gekennzeichnet, dass** es eine mobile Neutralisierungseinheit (200) umfasst, die umfasst:
- ein Modul (225) zum Sortieren von Asbestabfällen,
- einen Asbest-Schredder (255) und
- ein warmes Säurebad (250), um den Asbest inert zu machen.

2. System nach Anspruch 1, wobei das Modul zum Sortieren von Asbestabfällen umfasst:
- eine Scheibe, die mit Handschuhkästen versehen ist, und
- ein Förderband zum Transportieren der Asbestabfälle vor die Scheibe

3. System nach einem der Ansprüche 1 oder 2, das ein Mittel zum Einschließen der Atmosphäre in einer mobilen Neutralisierungseinheit umfasst.

4. System nach einem der Ansprüche 1 bis 3, wobei das warme Säurebad (250) der mobilen Neutralisierungseinheit (200) Schwefelsäure umfasst.

5. System nach einem der Ansprüche 1 bis 4, wobei die warme Säure im warmen Säurebad (250) der mobilen Neutralisierungseinheit (200) auf eine Temperatur gebracht wird, die zwischen 70 °C und 100 °C enthalten ist.

6. System nach einem der Ansprüche 1 bis 5, folgendes umfassend
- einen Fahrzeuganhänger, der den Träger der mobilen Neutralisierungseinheit (200) bildet oder
- ein Boot, das den Träger der mobilen Neutralisierungseinheit (200) bildet.

7. System nach einem der Ansprüche 1 bis 6, das ein Fahrzeug umfasst, das mit einem Motor versehen ist, wobei das warme Säurebad durch den Motor des Fahrzeugs erwärmt wird.

8. System nach einem der Ansprüche 1 bis 7, wobei die mobile Neutralisierungseinheit (200) darüber hinaus umfasst:
- einen Frischwasserbehälter (295);
- einen Abwasserbehälter (290);
- eine Dekontaminierungszelle (210, 215, 220) für Bediener;
- eine Einführungszelle (280) für asbesthaltige Abfälle und
- eine Evakuierungsschleuse (240) für nicht asbesthaltige Abfälle aus der Sortierung.

9. System nach einem der Ansprüche 1 bis 8, wobei das Modul zum Sortieren von Asbestabfällen (225) umfasst:
- eine Werkbank (275),
- ein Förderband (265) und
- eine Metallerkennungseinheit (260).

10. System nach einem der Ansprüche 1 bis 9, das ein Mittel zum Extrahieren von Magnesium einer flüssigen Fraktion aus dem gebrauchten Säurebad (250) umfasst.

11. System nach einem der Ansprüche 1 bis 10, wobei das Säurebad Schwefelsäure umfasst, die ein Mittel zur Herstellung von Anhydrit aus den Feststoffen aus der Reaktion umfasst, die im warmen Säurebad stattfinden.

12. System nach einem der Ansprüche 1 bis 11, das ein Mittel zur Herstellung von Materialien umfasst, die Mesoporen umfassen, von denen zumindest 10 % einen Durchmesser von weniger als 20 Å aufweisen.

13. System nach einem der Ansprüche 1 bis 12, wobei das Säurebad Schwefelsäure umfasst, die ein Mittel zur Herstellung von Magnesiumsulfat aus den Feststoffen aus der Reaktion umfasst, die im warmen Säurebad stattfinden.

14. System nach einem der Ansprüche 1 bis 13, das ein Mittel zur Herstellung von Zeolithen aus einer festen Fraktion aus dem gebrauchten Säurebad (250) umfasst.

15. Verfahren zur Neutralisierung von Asbest, **dadurch gekennzeichnet, dass** es umfasst:
- einen Schritt (100) zur Installation einer Asbestentsorgungsbaustelle einer mobilen Neutralisierungseinheit, umfassend:
- ein Modul (225) zum Sortieren von Asbestabfällen,
- einen Asbest-Schredder (255) und
- ein warmes Säurebad (250), um den Asbest inert zu machen;
- einen Schritt zum Sortieren von Asbestabfällen (125) im Modul zum Sortieren der mobilen Neutralisierungseinheit;
- einen Schritt zum Schreddern von Asbest (140) durch den Schredder der mobilen Neutralisierungseinheit;
- einen Schritt zum Attackieren des Asbests mit warmer Säure (150) des warmen Säurebades der mobilen Neutralisierungseinheit und
- einen Schritt zum Extrahieren (165 à 180) von Magnesium aus der flüssigen Fraktion aus der Asbestattacke mit der warmen Säure und/ oder zur Herstellung von Zeolithen (160) aus der festen Fraktion aus der Asbestattacke mit der warmen Säure.

## Claims

1. Asbestos neutralization system which comprises a mobile neutralization unit (200) comprising:
- an asbestos crusher (255); and
- a hot acid bath (250) for rendering the asbestos inert, and **characterized in that** it comprises an asbestos waste sorting module (225).

2. System according to claim 1, wherein the asbestos waste sorting module comprises:
- a window with gloveboxes; and
- a conveyor for transporting the asbestos waste in front of the window.

3. System according to one of claims 1 or 2, which comprises a means for containing the atmosphere within the mobile neutralization unit.

4. System according to one of claims 1 to 3, wherein the hot acid bath (250) of the mobile neutralization unit (200) contains sulfuric acid.

5. System according to one of claims 1 to 4, wherein the hot acid is brought to a temperature between 70°C and 100°C within the hot acid bath (250) of the mobile neutralization unit (200).

6. System according to one of claims 1 to 5, which comprises
- a vehicle trailer forming a base for the mobile neutralization unit (200); or
- a boat forming a base for the mobile neutralization unit (200).

7. System according to one of claims 1 to 6, which comprises a vehicle equipped with a motor, the hot acid bath being heated by the vehicle's motor.

8. System according to one of claims 1 to 7, wherein the mobile neutralization unit (200) also comprises:
- a tank (295) for clean water;
- a tank (290) for waste water;
- an operator decontamination unit (210, 215, 220);
- a unit (280) for inputting asbestos-bearing waste; and
- an evacuation chamber (240) for non-asbestos-bearing waste obtained from the sorting process.

9. System according to one of claims 1 to 8, wherein the asbestos waste sorting module (225) comprises:
- a work table (275);
- a conveyor (265); and
- a metal detection unit (260).

10. System according to one of claims 1 to 9, which comprises a means for extracting magnesium from a liquid fraction obtained from the waste acid bath (250).

11. System according to one of claims 1 to 10, wherein the acid bath contains sulfuric acid, which comprises a means for producing anhydrite from the solid products obtained from the reaction occurring in the hot acid bath.

12. System according to one of claims 1 to 11, which comprises a means for producing materials having mesopores, at least 10% of which have a diameter of less than 20 Å.

13. System according to one of claims 1 to 12, wherein the acid bath contains sulfuric acid, which comprises a means for producing magnesium sulfate from the solid products obtained from the reaction occurring in the hot acid bath.

14. System according to one of claims 11 to 13, which comprises a means for producing zeolites from a liquid fraction obtained from the waste acid bath (250).

15. Method of neutralizing asbestos, which comprises:
- a step (100) of installing on an asbestos removal site a mobile neutralization unit comprising:
- an asbestos waste sorting module (225);
- an asbestos crusher (255); and
- a hot acid bath (250) for rendering the asbestos inert;
- a step (125) of sorting asbestos waste in the sorting module of the mobile neutralization unit;
- a step (140) of crushing asbestos in the crusher of the mobile neutralization unit;
- a step (150) of dissolving the asbestos with the hot acid of the hot acid bath of the mobile neutralization unit; and
- a step (165 to 180) of extracting magnesium from the liquid fraction obtained from dissolving the asbestos with the hot acid and/or of producing zeolites (160) from the liquid fraction obtained from dissolving the asbestos with the hot acid.
